# EUROPÄISCHE PATENTSCHRIFT

(11) **EP 2 286 944 B1**
(45) Veröffentlichungstag und Bekanntmachung des Hinweises auf die Patenterteilung: **03.10.2012**
(21) Anmeldenummer: 10170972.3
(22) Anmeldetag: 27.07.2010
(51) Int. Cl.: B23B 31/00, F16F 9/32, F16F 9/02

(54) **Gasdruckfeder und Spannvorrichtung mit einer derartigen Gasdruckfeder**
Gas compression spring and tensioning device with such a gas compression spring
Vérin à gaz et dispositif de serrage doté d'un tel vérin à gaz

(30) Priorität: 14.08.2009 DE 102009037617
(43) Veröffentlichungstag der Anmeldung: 23.02.2011
(73) Patentinhaber: Ott-Jakob Spanntechnik GmbH, 87663 Lengenwang (DE)
(72) Erfinder: Greif, Josef, 87654, Friesenried (DE); Weixler, Stefan, 87477, Sulzberg-Oeschle (DE); Bechteler, Wolfgang, 87640, Ebenhofen (DE); Rösch, Conrad, 87459, Pfronten (DE)
(74) Vertreter: Schwarz, Thomas

(56) Entgegenhaltungen:
- EP-A1- 0 014 645
- EP-A1- 2 039 956
- DE-B3-102007 007 389
- FR-A- 1 249 681
- FR-A1- 2 585 795
- GB-A- 893 215

## Beschreibung

Die Erfindung betrifft eine Gasdruckfeder nach dem Oberbegriff des Anspruchs 1 und eine Spannvorrichtung mit einer derartigen Gasdruckfeder.

Gasdruckfedern weisen üblicherweise eine innerhalb eines Gehäuses verschiebbar geführte Kolbenstange und eine mit Druckgas gefüllte Druckkammer zur Erzeugung einer die Kolbenstange beaufschlagenden Druckkraft auf. Derartige Gasdruckfedern sind z.B. auch zur Erzeugung einer Einzugskraft in Spannvorrichtungen für das automatische Spannen eines Werkzeugs oder Werkzeughalters in einer Maschinenspindel einer Werkzeugmaschine einsetzbar. Aus der DE 10 2007 007 389 B3 ist eine Spannvorrichtung bekannt, bei der die über eine Zugstange auf einen Spannsatz wirkende Einzugskraft durch eine Gasdruckfeder erzeugt wird. Ein Problem bei Gasdruckfedern besteht allerdings darin, den innerhalb des Gehäuses verschiebbar geführten Kolben ausreichend zu schmieren, um die Reibung zwischen der Kolbenstange und dem Gehäuse zu minimieren. Oftmals wird daher in die mit Druckgas gefüllte Druckkammer zusätzlich eine geringe Menge eines Schmiermittels eingebracht, das eine Schmierung der mit Druckgas beaufschlagten Kolbenstange gegenüber dem Gehäuse gewährleisten soll. Allerdings ist die Schmierwirkung einer derartigen Maßnahme beschränkt. Außerdem wird die Kennlinie der Gasdruckfeder durch das in der Druckkammer befindliche Schmiermittel beeinflusst.

Aufgabe der Erfindung ist es, eine Gasdruckfeder mit einer verbesserten Schmierung der Kolbenstange und eine Spannvorrichtung mit einer derartigen Gasdruckfeder zu schaffen.

Diese Aufgabe wird durch eine Gasdruckfeder mit den Merkmalen des Anspruchs 1 und durch eine Spannvorrichtung mit den Merkmalen des Anspruchs 12 gelöst. Zweckmäßige Ausgestaltungen und vorteilhafte Weiterbildungen der Erfindung sind in den Unteransprüchen angegeben.

Bei der erfindungsgemäßen Gasdruckfeder sind auf der innerhalb des Gehäuses verschiebbar geführten Kolbenstange zwei zusätzliche Zwischenkolben angeordnet, durch welche die mit Druckgas gefüllte Druckkammer an beiden Seiten von jeweils einer mit Schmiermittel gefüllten ersten und zweiten Schmiermittelkammer innerhalb des Gehäuses abgetrennt wird. Durch die mit einem Schmiermittel gefüllten Schmiermittelkammern wird neben einer einfachen und effektiven Schmierung der Kolbenstange auch eine zusätzliche Abdichtung der mit Druckgas gefüllten Druckkammer nach außen erreicht. Das in der Druckkammer befindliche Gasvolumen bleibt länger erhalten, da die Druckkammer an beiden Seiten durch die Zwischenkolben und die mit Schmiermittel gefüllten Schmiermittelkammern nach außen abgedichtet ist.

In besonders vorteilhafter Weise sind die Zwischenkolben auf der Kolbenstange innerhalb eines vorgegeben Bereichs verschiebbar geführt. Bei einer Verschiebung der Kolbenstange wird somit über die relativ zu Kolbenstange beweglichen Zwischenkolben auch das in den Schmiermittelkammern befindliche Schmiermittel unter Druck gesetzt, wodurch das Schmiermittel in die zwischen Kolbenstange und Gehäuse befindlichen Spalte gedrückt und somit ein verbesserter Schmiereffekt erzeugt wird.

Die erste Schmiermittelkammer wird zweckmäßigerweise durch eine Stirnfläche des ersten Zwischenkolbens und eine innere Stirnfläche eines dicken Kolbenteils der Kolbenstange begrenzt. Die zweite Schmiermittelkammer wird durch eine Stirnfläche des zweiten Zwischenkolbens und eine innere Stirnfläche des Gehäuses begrenzt.

Weitere Besonderheiten und Vorzüge der Erfindung ergeben sich aus der folgenden Beschreibung eines bevorzugten Ausführungsbeispiels anhand der Zeichnung. Es zeigen
- Figur 1:: eine Gasdruckfeder im Längsschnitt und
- Figur 2:: eine Spannvorrichtung mit einer Gasdruckfeder im Längsschnitt.

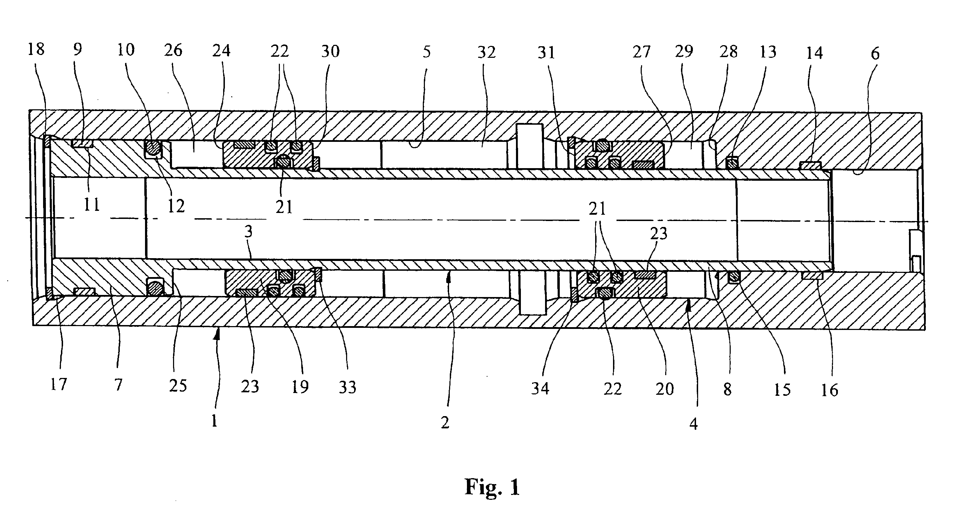

Die in Figur 1 im Längsschnitt dargestellte Gasdruckfeder enthält ein hohlzylindrisches Gehäuse 1, in dem eine Kolbenstange 2 axial verschiebbar geführt ist. Die Kolbenstange 2 ist hier als Hohlkörper mit einer durchgehenden Bohrung 3 zur Aufnahme einer nicht dargestellten Zugstange ausgeführt. Zur Aufnahme der Kolbenstange 2 enthält das Gehäuse 1 in der gezeigten Ausführung eine abgesetzte Durchgangsöffnung 4, die einen längeren ersten Bereich 5 mit größerem Durchmesser und einen kürzeren zweiten Bereich 6 mit geringerem Durchmesser aufweist. Die Kolbenstange 2 weist dagegen einen vergleichsweise kurzen dicken Kolbenteil 7 und einen längeren schlanken Kolbenteil 8 auf. Die Kolbenstange 2 ist mit ihrem kürzeren dicken Kolbenteil 7 in dem längeren Bereich 4 und mit ihrem schlanken längeren Kolbenteil 8 in dem kürzeren Bereich 5 der Durchgangsöffnung 4 geführt.

An ihrem kürzeren dicken Kolbenteil 7 wird die Kolbenstange 2 gegenüber dem Gehäuse 1 durch einen Führungsring 9 verschiebbar geführt und ist gegenüber dem Gehäuse durch einen Dichtungsring 10 abgedichtet. Der Führungsring 9 und der Dichtungsring 10 sind in entsprechenden Radialnuten 11 und 12 an der Außenseite des Kolbenteils 7 angeordnet. An ihrem schlanken längeren Kolbenteil 8 ist die Kolbenstange 2 gegenüber dem Gehäuse 1 ebenfalls durch einen Dichtungsring 13 gegenüber dem Gehäuse 1 abgedichtet und durch einen Führungsring 14 gegenüber dem Gehäuse 1 verschiebbar geführt. Hier sind der Dichtungsring 13 und der Führungsring 14 jedoch nicht in der Kolbenstange 2 sondern in inneren Radialnuten 15 und 16 des Gehäuses 1 untergebracht. Durch einen innerhalb einer Ringnut 17 an dem in der Zeichnung linken Ende der Durchgangsöffnung 4 des Gehäuses 1 angeordneten Sicherungsring 18 wird die Verschiebung der Kolbenstange 2 innerhalb des Gehäuses 1 nach Außen begrenzt.

Auf dem längeren schlanken Kolbenteil 8 der Kolbenstange 2 sind zwei in Axialrichtung voneinander beabstandete, ringförmige Zwischenkolben 19 und 20 angeordnet. Die Zwischenkolben 19 und 20 sind auf dem schlankeren Kolbenteil 8 der Kolbenstange 2 verschiebbar angeordnet und durch radial innere und äußere Dichtungen 21 bzw. 22 gegenüber der Kolbenstange 2 bzw. dem Gehäuse 1 abgedichtet. Die Zwischenkolben 19 und 20 sind außerdem durch Führungsringe 23 gegenüber dem Gehäuse 1 bzw. gegenüber den Kolben 2 geführt.

Zwischen der linken Stirnfläche 24 des in der Zeichnung links angeordneten ersten Zwischenkolbens 19 und einer inneren Stirnfläche 25 des dicken Kolbenteils 7 wird eine erste Schmiermittelkammer 26 und zwischen der rechten Stirnfläche 27 des in der Zeichnung rechts angeordneten zweiten Zwischenkolbens 20 und einer inneren Stirnfläche 28 des Gehäuses 1 wird eine zweite Schmiermittelkammer 29 zur Aufnahme eines Schmiermittels begrenzt. Als Schniermittel kann z.B. ein hochviskoses Fett eingesetzt werden. Zwischen der rechten Stirnfläche 30 des ersten Zwischenkolbens 19 und der linken Stirnfläche 31 des zweiten Zwischenkolbens 20 wird eine mit Druckgas, vorzugsweise Luft, gefüllte Druckkammer 32 begrenzt.

Auf dem schlankeren Kolbenteil 8 der Kolbenstange 2 ist ein erster Sicherungsring 33 angeordnet, der eine von der Stirnfläche 25 in Axialrichtung der Kolbenstange 2 weg gerichtete Verschiebung des ersten Zwischenkolbens 19 relativ zur Kolbenstange 2 begrenzt. Eine von der inneren Stirnfläche 28 des Gehäuses 1 weg gerichtete Bewegung des zweiten Zwischenkolbens 20 relativ zur Kolbenstange 2 wird durch einen am Gehäuse 1 fixierten inneren zweiten Sicherungsring 34 begrenzt.

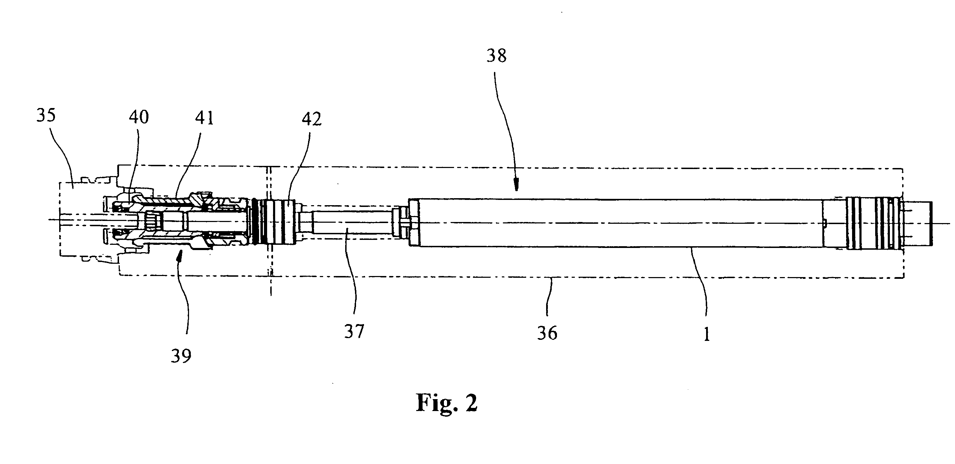

Die in Figur 2 dargestellte Spannvorrichtung zum Spannen eines Werkzeugs oder einer Werkzeugaufnahme 35 in einer Maschinenspindel 36, insbesondere einer Werkzeugmaschine, enthält eine zwischen einer Spannstellung und einer Lösestellung axial verschiebbare Zugstange 37, eine gemäß Figur 1 ausgeführte Gasdruckfeder 38 zur Beaufschlagung der Zugstange 37 in Richtung der Spannstellung und einen am vorderen Ende der Zugstange angeordneten Spannsatz 39, der zum Klemmen bzw. zur Freigabe des Werkzeugs bzw. der Werkzeugaufnahme 36 dient.

Der Spannsatz 39 weist einen am vorderen Ende der Zugstange 37 befestigten Spannkonus 40 und mehrere an dessen Außenseite anliegende Spannelemente 41 in Form von Zangensegmenten auf, die durch Axialbewegung der Zugstange 37 zwischen einer radial inneren Freigabestellung und einer radial äußeren Klemmstellung verschoben werden. Der Aufbau und die Funktionsweise des Spannsatzes ist in der DE 100 31 027 B4 ausführlich erläutert.

Die Zugstange 37 verläuft durch eine Fluidzuführungsbuchse 42 und innerhalb des Gehäuses 1 der Gasdruckfeder 38 durch die in Figur 1 dargestellte Kolbenstange 2 und ist an ihrem gegenüber dem Gehäuse 1 nach hinten vorstehenden hinteren Ende mit einer nicht dargestellten Löseeinheit verbunden. Durch die Gasdruckfeder 38 wird die Zugstange 37 in ihre zurückgezogene Spannstellung gedrückt, so dass die Spannelemente 41 über den Spannkonus 40 in die radial äußere Klemmstellung gedrückt werden Über die Löseeinheit kann die Zugstange 37 entgegen der Kraft der Gasdruckfeder 38 in eine vorgeschobene Lösestellung verschoben werden, wobei sich die Spannelemente 41 in die radial innere Freigabestellung bewegen.

## Patentansprüche

1. Gasdruckfeder mit einem Gehäuse (1), einer innerhalb des Gehäuses (1) verschiebbar geführten Kolbenstange (2) und einer mit Druckgas gefüllten Druckkammer (32) innerhalb des Gehäuses (1), **dadurch gekennzeichnet, dass** auf der Kolbenstange (2) zwei Zwischenkolben (19, 20) angeordnet sind, durch welche die Duckkammer (32) von einer mit einem Schmiermittel gefüllten ersten und zweiten Schmiermittelkammer (26, 29) abgetrennt wird.

2. Gasdruckfeder nach Anspruch 1, **dadurch gekennzeichnet, dass** die Zwischenkolben (19, 20) auf der Kolbenstange (2) axial verschiebbar geführt sind.

3. Gasdruckfeder nach Anspruch 1 oder 2, **dadurch gekennzeichnet, dass** die Druckkammer (32) zwischen den beiden Zwischenkolben (19, 20) angeordnet ist.

4. Gasdruckfeder nach einem der Ansprüche 1 bis 3, **dadurch gekennzeichnet, dass** die erste Schmiermittelkammer (26) durch eine Stirnfläche (24) des ersten Zwischenkolbens (19) und eine innere Stirnfläche (25) eines dicken Kolbenteils (7) der Kolbenstange (2) begrenzt wird.

5. Gasdruckfeder nach einem der Ansprüche 1 bis 4, **dadurch gekennzeichnet, dass** die zweite Schmiermittelkammer (29) durch eine Stirnfläche (27) des zweiten Zwischenkolbens (20) und eine innere Stirnfläche (28) des Gehäuses (1) begrenzt wird.

6. Gasdruckfeder nach einem der Ansprüche 1 bis 5, **dadurch gekennzeichnet, dass** die Kolbenstange (2) durch Führungsringe (9, 14) verschiebbar innerhalb des Gehäuses (1) geführt ist.

7. Gasdruckfeder nach einem der Ansprüche 1 bis 6, **dadurch gekennzeichnet, dass** die Kolbenstange (2) durch Dichtringe (10, 13) gegenüber dem Gehäuse (1) abgedichtet ist.

8. Gasdruckfeder nach einem der Ansprüche 1 bis 7, **dadurch gekennzeichnet, dass** die Zwischenkolben (19, 20) durch Führungsringe (23) verschiebbar gegenüber der Kolbenstange (2) oder dem Gehäuse (1) geführt sind.

9. Gasdruckfeder nach einem der Ansprüche 1 bis 8, **dadurch gekennzeichnet, dass** die Zwischenkolben (19, 20) durch Dichtungsringe (21, 22) gegenüber der Kolbenstange (2) und dem Gehäuse (1) abgedichtet sind.

10. Gasdruckfeder nach einem der Ansprüche 1 bis 8, **dadurch gekennzeichnet, dass** die axiale Verschiebung der Zwischenkolben (19, 20) relativ zu der Kolbenstange (2) durch Sicherungsringe (33, 34) begrenzt wird.

11. Gasdruckfeder nach einem der Ansprüche 1 bis 9, **dadurch gekennzeichnet, dass** die axiale Verschiebung der Kolbenstange (2) innerhalb des Gehäuses (1) durch einen Sicherungsring (18) begrenzt wird.

12. Spannvorrichtung zum Spannen eines Werkzeugs oder Werkzeughalters (35) in einer Maschinenspindel (36), insbesondere einer Werkzeugmaschine, mit einer zwischen einer Spannstellung und einer Lösestellung axial verschiebbaren Zugstange (37), einer Druckfeder zur Beaufschlagung der Zugstange (37) in Richtung der Spannstellung, einem am vorderen Ende der Zugstange (38) angeordneten Spannkonus (40) und mehreren an der Außenseite des Spannkonus (40) anliegenden Spannelementen (41), die durch Axialbewegung der Zugstange (37) zwischen einer Klemmstellung zur Halterung des Werkzeugs oder Werkzeughalters (36) und einer Freigabestellung zur Freigabe des Werkzeugs oder Werkzeughalters (36) bewegbar sind, **dadurch gekennzeichnet, dass** die Druckfeder als Gasdruckfeder (38) nach einem der Ansprüche 1 bis 11 ausgebildet ist.

13. Spannvorrichtung nach Anspruch 12, **dadurch gekennzeichnet, dass** die Zugstange (37) durch die als Hohlkörper ausgebildete Kolbenstange (2) der Gasdruckfeder (38) verläuft.

## Claims

1. Gas compression spring with a housing (1), a piston rod (2) guided displaceably inside the housing (1) and a pressure chamber (32) filled with gas under pressure inside the housing (1), **characterised in that** arranged on the piston rod (2) there are two intermediate pistons (19, 20) through which the pressure chamber (32) is separated from a first and a second lubricant chamber (26, 29) filled with a lubricant.

2. Gas compression spring according to claim 1, **characterised in that** the intermediate pistons (19, 20) are guided displaceable axially on the piston rod (2).

3. Gas compression spring according to claim 1 or 2, **characterised in that** the pressure chamber (32) is located between the two intermediate pistons (19, 20).

4. Gas compression spring according to one of claims 1 to 3, **characterised in that** the first lubricant chamber (26) is bounded by an end face (24) of the first intermediate piston (19) and an inner end face (25) of a thick piston part (7) of the piston rod (2).

5. Gas compression spring according to one of claims 1 to 4, **characterised in that** the second lubricant chamber (29) is bounded by an end face (27) of the second intermediate piston (20) and an inner end face (28) of the housing (1).

6. Gas compression spring according to one of claims 1 to 5, **characterised in that** the piston rod (2) is guided displaceably inside the housing (1) by guide rings (9, 14).

7. Gas compression spring according to one of claims 1 to 6, **characterised in that** the piston rod (2) is sealed in relation to the housing (1) by sealing rings (10, 13).

8. Gas compression spring according to one of claims 1 to 7, **characterised in that** the intermediate pistons (19, 20) are guided displaceably in relation to the piston rod (2) or the housing (1) by guide rings (23).

9. Gas compression spring according to one of claims 1 to 8, **characterised in that** the intermediate pistons (19, 20) are sealed in relation to the piston rod (2) and the housing (1) by sealing rings (21, 22).

10. Gas compression spring according to one of claims 1 to 8, **characterised in that** the axial displacement of the intermediate pistons (19, 20) relative to the piston rod (2) is limited by locking rings (33, 34).

11. Gas compression spring according to one of claims 1 to 9, **characterised in that** the axial displacement of the piston rod (2) inside the housing (1) is limited by a locking ring (18).

12. Clamping device for clamping a tool or tool holder (35) in a machine spindle (36), in particular of a machine tool, with a draw rod (37) displaceable axially between a clamping position and a releasing position, a compression spring for forcing the draw rod (37) in the direction of the clamping position, a clamping cone (40) arranged at the front end of the draw rod (38) and a plurality of clamping elements (41) which bear on the outside of the clamping cone (40) and are moveable through axial movement of the draw rod (37) between a clamping position for holding the tool or tool holder (36) and a releasing position for releasing the tool or tool holder (36), **characterised in that** the compression spring is embodied as a gas compression spring (38) according to one of claims 1 to 11.

13. Clamping device according to claim 12, **characterised in that** the draw rod (37) runs through the piston rod (2) of the gas compression spring (38), the piston rod being embodied as a hollow element.

## Revendications

1. Ressort de pression à gaz doté d'un boîtier (1) d'une tige de piston (2) guidée de manière à pouvoir coulisser à l'intérieur du boîtier (1) et d'une chambre de pression (32) remplie de gaz sous pression à l'intérieur du boîtier (1), **caractérisé en ce que** sont disposés sur la tige de piston (2) deux pistons intermédiaires (19, 20) par lesquels la chambre de pression (32) est séparée d'une première et d'une deuxième chambre de lubrifiant (26, 29) remplies d'un lubrifiant.

2. Ressort de pression à gaz selon la revendication 1, **caractérisé en ce que** les pistons intermédiaires (19, 20) sont guidés de manière à pouvoir coulisser de manière axiale sur la tige de piston (2).

3. Ressort de pression à gaz selon la revendication 1 ou 2, **caractérisé en ce que** la chambre de pression (32) est disposée entre les deux pistons intermédiaires (19, 20).

4. Ressort de pression à gaz selon l'une quelconque des revendications 1 à 3, **caractérisé en ce que** la première chambre de lubrifiant (26) est délimitée par une surface frontale (24) du premier piston intermédiaire (19) et par une surface frontale intérieure (25) d'une partie de piston (7) épaisse de la tige de piston (2).

5. Ressort de pression à gaz selon l'une quelconque des revendications 1 à 4, **caractérisé en ce que** la deuxième chambre de lubrifiant (29) est délimitée par une surface frontale (27) du deuxième piston intermédiaire (20) et par une surface frontale intérieure (28) du boîtier (1).

6. Ressort de pression à gaz selon l'une quelconque des revendications 1 à 5, **caractérisé en ce que** la tige de piston (2) est guidée par des bagues de guidage (9, 14) de manière à pouvoir coulisser à l'intérieur du boîtier (1).

7. Ressort de pression à gaz selon l'une quelconque des revendications 1 à 6, **caractérisé en ce que** la tige de piston (2) est rendue étanche par rapport au boîtier (1) par des bagues d'étanchéité (10, 13).

8. Ressort de pression à gaz selon l'une quelconque des revendications 1 à 7, **caractérisé en ce que** les pistons intermédiaires (19, 20) sont guidés de manière à pouvoir coulisser par rapport à la tige de piston (2) ou par rapport au boîtier (1) par des bagues de guidage (23).

9. Ressort de pression à gaz selon l'une quelconque des revendications 1 à 8, **caractérisé en ce que** les pistons intermédiaires (19, 20) sont rendus étanches par rapport à la tige de piston (2) et par rapport au boîtier (1) par des bagues d'étanchéité (21, 22).

10. Ressort de pression à gaz selon l'une quelconque des revendications 1 à 8, **caractérisé en ce que** le coulissement axial des pistons intermédiaires (19, 20) est limité par rapport à la tige de piston (2) par des bagues de blocage (33, 34).

11. Ressort de pression à gaz selon l'une quelconque des revendications 1 à 9, **caractérisé en ce que** le coulissement axial de la tige de piston (2) est délimité à l'intérieur du boîtier (1) par une bague de blocage (18).

12. Dispositif de serrage servant à serrer un outil ou un porte-outil (35) dans une broche de machine (36), en particulier d'une machine-outil, doté d'une barre de traction (37) pouvant être coulissée de manière axiale entre une position serrée et une position lâche, d'un ressort de pression servant à solliciter la barre de traction (37) dans la direction de la position serrée, d'un cône de serrage (40) disposé au niveau de l'extrémité avant de la barre de traction (38) et de plusieurs éléments de serrage (41) reposant au niveau du côté extérieur du cône de serrage (40), lesquels peuvent être déplacés par un déplacement axial de la barre de traction (37) entre une position bloquée servant à maintenir l'outil ou le porte-outil (36) et une position débloquée servant à débloquer l'outil ou le porte-outil (36), **caractérisé en ce que** le ressort de pression est réalisé comme un ressort de pression à gaz (38) selon l'une quelconque des revendications 1 à 11.

13. Dispositif de serrage selon la revendication 12, **caractérisé en ce que** la barre de traction (37) s'étend à travers la tige de piston (2) du ressort de pression à gaz (38), réalisée comme un corps creux.
